# EUROPEAN PATENT APPLICATION

(11) **EP 3 975 497 A1**
(43) Date of publication of application: **30.03.2022**
(21) Application number: 20843488.6
(22) Date of filing: 29.05.2020
(51) Int. Cl.: H04L 29/06, H04L 29/08

(54) **MESSAGE LOAD BALANCING METHOD**

(30) Priority: 22.07.2019 CN 201910665215
(71) Applicant: ZTE Corporation, Shenzhen, Guangdong 518057 (CN)
(72) Inventor: HU, Ting, Shenzhen, Guangdong 518057 (CN); REN, Peng, Shenzhen, Guangdong 518057 (CN); ZHAO, Shirong, Shenzhen, Guangdong 518057 (CN)
(74) Representative: Betten & Resch
(86) International application number: PCT/CN2020/093225
(87) International publication number: WO 2021/012787

(57) **Abstract**

Disclosed is a method for message load balancing, including: requesting by a first NF a second NF to establish N TCP links for sending HTTP messages; sending by the second NF a first setting frame carrying a first maximum number of concurrent streams to the first NF; sending by the second NF a second setting frame carrying a second maximum number of concurrent streams to the first NF, the second maximum number of concurrent streams being less than the first maximum number of concurrent streams; and requesting by the first NF the second NF to establish M new TCP links based on a total number of current service requests and the second maximum number of concurrent streams, where the second maximum number of concurrent streams multiplied by a sum of M and N is equal to the total number of current service requests.

## Description

### CROSS-REFERENCE TO RELATED APPLICATION

The disclosure claims the priority of the Chinese patent application CN201910665215.8 entitled "METHOD FOR MESSAGE LOAD BALANCING" filed on July 22nd, 2019, the entire contents of which are incorporated herein by reference.

### TECHNICAL FIELD

The disclosure relates to the field of communications, and in particular, to a method for message load balancing.

### BACKGROUND

Explanation of terms:
3GPP: 3rd Generation Partnership Project, which is an international organization responsible for formulating wireless communication standards.
5GC: 5G Core Network, which is a core network connected to a 5G access network.
TCP: Transmission Control Protocol, which is a transmission layer communication protocol based on byte streams.
NF: Network Function, which is a processing function adopted or defined by 3GPP in a network, which has defined functional behaviors and interfaces defined by 3GPP. The network function can be regarded as a network element running on proprietary hardware or a software instance running on proprietary hardware or a virtual function instantiated on a suitable platform.
SBI: Service Based Interface, which manifests how a set of services are provided or opened for a given NF.
HTTP: Hyper Text Transfer Protocol.
Http/2: HTTP version 2.0 (HTTP version 2).

In a 5GC system defined by 3GPP, SBI messages between various NFs use HTTP/2 based on TCP as the protocol type. Due to the large-capacity requirements of the 5GC system, NF generally uses multiple processing instances to process HTTP messages (the instances here may be virtual machines or containers), and there is a load balance relationship among multiple instances.

In the browser-server networking mode of the traditional Internet, each of browsers distributed at different locations will establish at least one independent TCP link to the server, and the massive number of TCP links are processed by the load balancing algorithm, which enables the number of TCP links on each instance basically the same, so that the number of HTTP messages on each instance is also basically the same.

In the 5GC system, due to the multi-stream mechanism of the HTTP/2 protocol, a large number of HTTP messages can be simultaneously processed on each TCP link, and the link reuse rate is very high. Therefore, only a small number of TCP links are required between two NFs to meet the requirement of large capacity, which will bring a problem that the number of TCP links carried by multiple processing instances on a NF as the HTTP server is not equal, so the number of messages processed by each instance is not equal, resulting in load imbalance.

### SUMMARY

The disclosure provides a method and a device for message load balancing, to at least alleviate the above-mentioned problem of load imbalance among multiple processing instances caused by the small number of TCP links between NFs in the 5GC system.

The disclosure provides a method for message load balancing. The method includes: requesting, by a first NF, a second NF to establish N TCP links, the N TCP links being configured to send HTTP messages; sending, by the second NF, a first setting frame to the first NF, the first setting frame carrying a first maximum number of concurrent streams; sending, by the second NF, a second setting frame to the first NF, the second setting frame carrying a second maximum number of concurrent streams, the second maximum number of concurrent streams being less than the first maximum number of concurrent streams; and requesting, by the first NF, the second NF to establish M TCP links based on a total number of current service requests and the second maximum number of concurrent streams, where the second maximum number of concurrent streams multiplied by a sum of M and N is equal to the total number of current service requests.

The disclosure provides a network device. The network device includes a processor, a memory and a communication bus. The communication bus is configured to implement communication between the processor and the memory.

The processor is configured to execute a service processing program stored in the memory to perform the above-mentioned service processing method.

The disclosure further provides a storage medium. The storage medium stores at least one of a first service processing program and a second service processing program. The first service processing program and the second service processing program, when executed by one or more processors, cause the one or more processors to perform the above-mentioned service processing method.

### BRIEF DESCRIPTION OF DRAWINGS

FIG. 1 is a flow chart of a method for message load balancing according to the disclosure;
FIG. 2 is a schematic diagram of a message load balancing system according to an implementation of the disclosure;
FIG. 3 is a timing diagram of another message load balancing system according to an implementation of the disclosure; and
FIG. 4 is a schematic diagram of a network device according to the disclosure.

### DETAILED DESCRIPTION

Objects, technical themes and advantages of the present disclosure will be clearer from a detailed description of embodiments of the disclosure in conjunction with the drawings. It should be understood that the embodiments described herein are only intended to explain, but not to limit the disclosure.

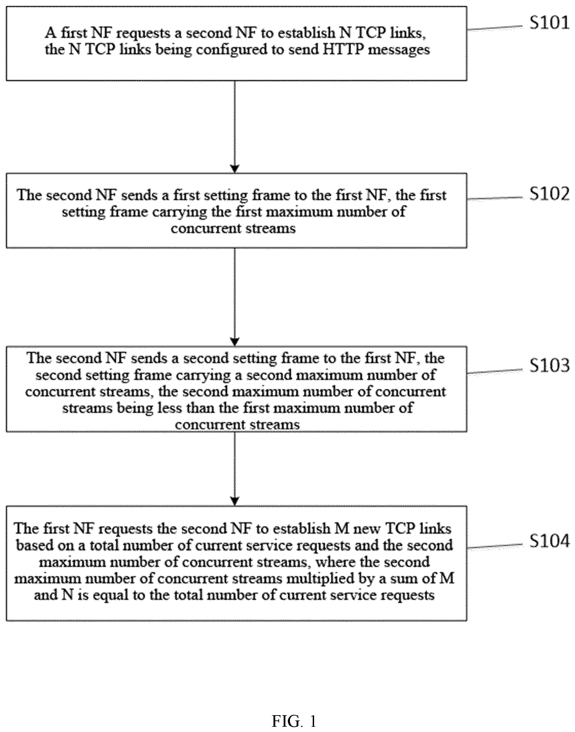

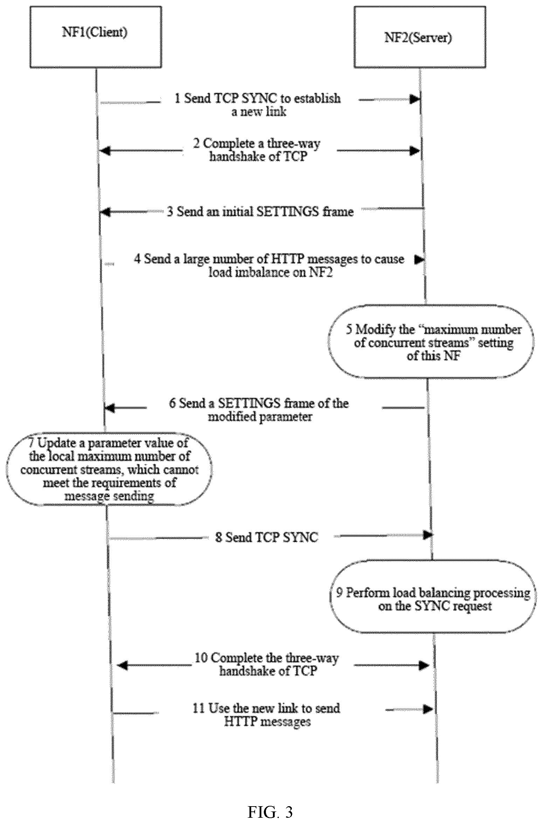

As shown in FIGS. 1 and 3, at step S101, a first NF serving as a client requests a second NF serving as a server to establish N TCP links, the N TCP links being configured to send HTTP messages.

In an implementation, the first NF serving as the client sends a TCP SYNC (Synchronize Sequence Numbers) packet to the second NF serving as the server, enters a SYN_SEND state, and waits for the server to confirm. The second NF serving as the server confirms the SYNC of the client and sends a SYN packet, namely SYN+ACK (Acknowledge character) packet. At this time, the second NF serving as the server enters a SYN_RECV state. The first NF serving as the client receives the SYN+ACK packet of the second NF serving as the server, and sends an acknowledgement packet ACK to the server. After this packet is sent, the first NF serving as the client and the second NF serving as the server enter an ESTABLISHED state to complete a three-way handshake. After the first NF and the second NF complete the three-way handshake of TCP, the link is successfully established, and two initial TCP links are established between the first NF and the second NF.

At step S102, the second NF sends a first setting frame to the first NF, the first setting frame carrying a first maximum number of concurrent streams.

In an implementation, after the initial TCP links are successfully established, the second NF serving as the server sends an initial SETTINGS frame to the first NF serving as the client, where parameter SETTINGS_MAX_CONCURRENT_STREAMS (the current maximum number of concurrent streams) indicates a maximum number of HTTP message requests that can be processed simultaneously on a link, and the parameter SETTINGS_MAX_CONCURRENT_STREAMS (the current maximum number of concurrent streams) has an initial value of 100.

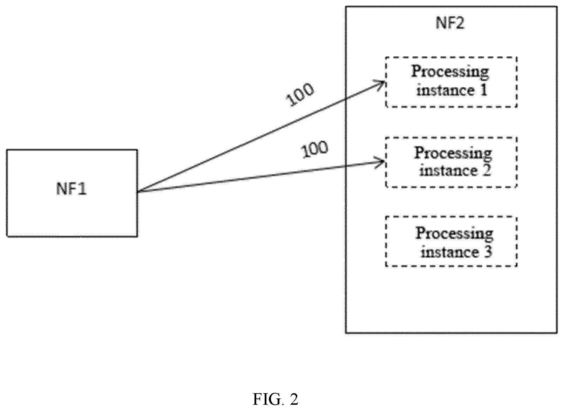

In an implementation, as shown in FIG. 2, the first NF serving as the client sends 200 HTTP requests (that is, the total number of current service requests) to the second NF every second. Assuming that the average time delay between sending an HTTP request from the first NF and receiving a HTTP response from the second NF is 1 second, which means that it takes 1 second for a stream to be created and released, the complete operation of a group of streams from creation to release can be completed every second, and the maximum number of concurrent streams in a TCP link is the initial value 100 specified in the initial SETTINGS frame sent by the second NF, the maximum number of requests that can be sent on a TCP link per second is 1 ^{∗}100 (streams) =100 (streams). If the message volume between the first NF and the second NF is at most 200 pairs per second, according to the above formula, the first NF only needs to establish two TCP links with the second NF to meet the requirements. At this time, the second NF has two processing instances with one link on each, and the third instance is idle.

When the first NF sends a large number of HTTP messages to the second NF, the number of TCP links carried by multiple processing instances on the second NF serving as the server is not equal. At this time, the number of processing instances on the second NF is greater than 2, so the number of messages processed by various instances is not equal, resulting in load imbalance. If multiple NFs establish links to the second NF in this way, the load imbalance between different instances of the second NF may be more serious.

In an implementation, the processing instance on the second NF is a virtual machine or a processing container.

At step S103, the second NF sends a second setting frame to the first NF, the second setting frame carrying a second maximum number of concurrent streams, the second maximum number of concurrent streams being less than the first maximum number of concurrent streams.

In an implementation, the second NF reduces the maximum number of concurrent streams of the second NF to 80. The above setting is applied to the first NF, and the parameter SETTINGS_MAX_CONCURRENT_STREAM in the first NF is reduced to 80. At this time, the maximum number of messages sent on the two TCP links per second is 160, which is less than 200 (the total number of current service requests), thus being unable to meet the service requirements.

In an implementation, when the number of processing instances on the second NF is greater than N, the second NF reduces the current maximum number of concurrent streams. At this time, the number of processing instances is 3, the number of TCP links is 2, and the second NF reduces the current maximum number of concurrent streams.

In an implementation, the second NF reads a load balancing configuration file from local configuration files, and reduces the maximum number of concurrent streams in the setting frame.

In an implementation, the second NF may receive a configuration instruction input by a user, and reduces the maximum number of concurrent streams in the setting frame.

At step S104, the first NF requests the second NF to establish M TCP links based on the total number of current service requests and the reduced maximum number of concurrent streams, where the second maximum number of concurrent streams multiplied by a sum of M and N is equal to the total number of current service requests.

In an implementation, the second NF evenly distributes the M TCP links on various processing instances of the second NF. The second NF performs load balancing processing on the TCP SYNC message, and according to the distribution of the original N TCP links, the newly-established link and the original two links are evenly distributed on processing instances of the second NF.

In an implementation, the first NF uses the new links to send the HTTP message. If the new links still cannot meet the requirement of the maximum number of concurrent streams, steps S102-S103 are repeated until the requirement is met.

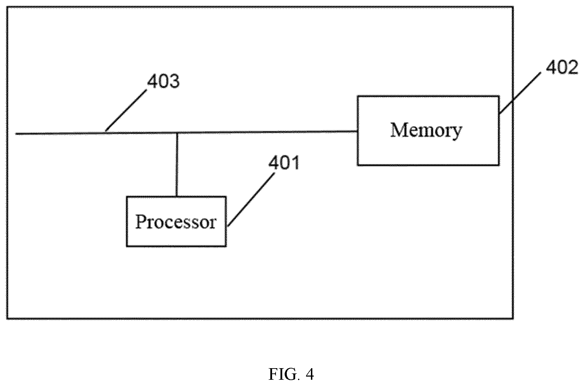

In addition, this embodiment provides a network device. As shown in FIG. 4, the network device includes a processor 401, a memory 402, and a communication bus 403 for connecting the processor 401 and the memory 402. The memory 402 may be a storage medium storing at least one of a first service processing program and a second service processing program.

In an implementation, when the processor reads the first service processing program, the network device in this embodiment serves as the first NF serving as the client.

In an implementation, when the processor reads the second service processing program, the network device in this embodiment serves as the second NF serving as the server.

This embodiment provides a storage medium. The storage medium may store one or more computer programs that may be read, compiled and executed by one or more processors. In this embodiment, the storage medium stores at least one of the first service processing program and the second service processing program, which when executed by one or more processors, cause the one or more processors to carry out the method for message load balancing described in the disclosure.

The disclosure solves the problem of load imbalance among multiple processing instances caused by the small number of TCP links between NFs in the 5GC system.

It can be understood by those having ordinary skill in the art that all or some of the steps in the methods, , functional modules/units in the systems and devices disclosed above can be implemented as software, firmware, hardware and their appropriate combinations. In the hardware implementation, the division between functional modules/units mentioned in the above description does not necessarily correspond to the division of physical components. For example, a physical component may have multiple functions, or a function or a step may be cooperatively executed by several physical components. Some or all of the components may be implemented as software executed by a processor (such as a digital signal processor or a microprocessor), or as hardware, or as an integrated circuit, such as an application specific integrated circuit. Such software may be distributed on a computer-readable medium, and the computer-readable medium may include a computer storage medium (or a non-transitory medium) and a communication medium (or a transitory medium). As is well known to those having ordinary skill in the art, the term computer storage medium includes volatile and nonvolatile, removable and non-removable media implemented in any method or technology for storing information such as computer readable instructions, data structures, program modules or other data. The computer storage medium includes, but is not limited to, RAM, ROM, EEPROM, flash memory or other memory technologies, CD-ROM, digital versatile disks (DVD) or other optical disk storages, magnetic cassettes, magnetic tapes, magnetic disk storages or other magnetic storage devices or any other media that may be used to store desired information and may be accessed by a computer. Furthermore, it is well-known to those having ordinary skill in the art that communication media typically contain computer-readable instructions, data structures, program modules or other data in a modulated data signal such as carriers or other transmission mechanisms, and may include any information delivery media.

In addition, it should be understood by those having ordinary skill in the art that the service processing method, system, network device and storage medium provided in each embodiment of the disclosure may be applied not only to the existing communication system, but also to any future communication system.

## Claims

1. A method for message load balancing, comprising:
requesting, by a first NF, a second NF to establish N TCP links, the N TCP links being configured to send HTTP messages;
sending, by the second NF, a first setting frame to the first NF, the first setting frame carrying a first maximum number of concurrent streams;
sending, by the second NF, a second setting frame to the first NF, the second setting frame carrying a second maximum number of concurrent streams, the second maximum number of concurrent streams being less than the first maximum number of concurrent streams; and
requesting, by the first NF, the second NF to establish M new TCP links based on a total number of current service requests and the second maximum number of concurrent streams, wherein the second maximum number of concurrent streams multiplied by a sum of M and N is equal to the total number of current service requests, and M and N are both integers greater than 0.

2. The method for message load balancing of claim 1, further comprising: distributing, by the second NF, the M TCP links evenly on processing instances of the second NF.

3. The method for message load balancing of claim 1, wherein:
the total number of current service requests is the number of HTTP messages sent by the first NF to the second NF.

4. The method for message load balancing of claim 1, wherein the second NF sends the second setting frame to the first NF in response to a number of processing instances on the second NF being greater than N, the second setting frame carrying the second maximum number of concurrent streams, the second maximum number of concurrent streams being less than the first maximum number of concurrent streams.

5. The method for message load balancing of claim 1, wherein the second NF receives a configuration instruction input by a user, reduces a maximum number of concurrent streams according to the configuration instruction, and sends the second setting frame to the first NF, the second setting frame carrying the second maximum number of concurrent streams, the second maximum number of concurrent streams being less than the first maximum number of concurrent streams.

6. The method for message load balancing of claim 1, wherein the second NF reads a load balancing configuration file from local configuration files, and sends the second setting frame to the first NF, the second setting frame carrying the second maximum number of concurrent streams, the second maximum number of concurrent streams being less than the first maximum number of concurrent streams.

7. A network device, comprising: a processor, a memory and a communication bus, wherein:
the communication bus is configured to implement communication between the processor and the memory; and
the processor is configured to execute a service processing program stored in the memory to perform the method for message load balancing of claim 1.

8. A storage medium, storing at least one of a first service processing program and a second service processing program which, when executed by one or more processors, cause the one or more processors to perform the method for message load balancing of claim 1.
